# EUROPEAN PATENT SPECIFICATION

(11) **EP 1 480 844 B1**
(45) Date of publication and mention of the grant of the patent: **23.04.2008**
(21) Application number: 03703596.1
(22) Date of filing: 02.02.2003
(51) Int. Cl.: B60G 5/02, B60G 11/10

(54) **CONICAL RUBBER BEARING**
KONISCHES GUMMILAGER
PALIER DE SUPPORT CONIQUE

(30) Priority: 28.02.2002 SE 0200617
(43) Date of publication of application: 01.12.2004
(73) Proprietor: VOLVO LASTVAGNAR AB, 405 08 Göteborg (SE)
(72) Inventor: HEDENSTIERNA, Johan, S-434 97 Kungsbacka (SE)
(74) Representative: Fröhling, Werner Otto
(86) International application number: PCT/SE2003/000180
(87) International publication number: WO 2003/072377

(56) References cited:
- DE-A1- 2 312 864
- DE-C- 481 198
- GB-A- 2 098 937
- US-A- 2 810 587
- US-A- 3 099 459
- US-A- 4 291 925
- US-A- 5 641 248

## Description

### TECHNICAL FIELD

The present invention relates to a bearing arrangement for mounting the spring suspension for a leaf-spring-supported bogie on a vehicle and a method for mounting the spring suspension for a leaf-spring-supported bogie on a vehicle.

### BACKGROUND

Today, the spring suspension for a leaf-spring-supported bogie on a heavy-duty vehicle, for example a truck, is mounted by means of a sliding bearing. The sliding bearing consists of a round metal shaft which is mounted in a corresponding recess in a cradle. The bearing means consists of an annular element made of, for example, copper, plastic or a composite material which is lubricated with grease in order to reduce the friction and increase the life.

This bearing system has to have torsional rigidity which is as low as possible. The reason is that the axles on the bogie are to be capable of following the irregularities of the ground so that the load can be distributed uniformly between the two axles the whole time, so that what is known as load-shifting is prevented. For a vehicle with drive on both axles, both wheel pairs must moreover have contact with the ground so that driving power is not lost. At the same time, other rigidities in the bearing system have to be as high as possible; the cardanic rigidity, for example, has to be as high as possible in order to prevent the springs of the vehicle striking against the frame sides on the vehicle. The bearings must moreover have sufficiently great strength in order to cope with the loads in different directions brought about by the axle load.

Although these sliding bearings have the desired bearing characteristics and therefore function in a technically satisfactory manner, they nevertheless have a number of disadvantages. A major disadvantage is their maintenance-intensive construction. A sliding bearing on, for example, a timber vehicle, which is subjected to great loads and a hard environment, may need to be lubricated every day, which is both costly and time-consuming. The construction also results in the life of the sliding bearing being relatively limited, even if it is lubricated according to the instructions. Negligence with lubrication leads to the bearings wearing out considerably faster.

GB 2098937 A discloses an example of a lubricatable sliding bearing for mounting a tandem axle on a vehicle.

Attempts are being made in the market to replace the sliding bearing with some type of cylindrical rubber bearing. This is being done primarily in order to provide a maintenance-free, that is to say lubrication-free, bearing system. The greatest disadvantage of these bearings is torsional rigidity which is too high, which can cause the problems described above. Furthermore, the rigidity in other directions is dependent on the torsional rigidity, that is to say high torsional rigidity leads to high rigidities in other directions. Reduced torsional rigidity leads to reduced rigidity in other directions, which may result in extra stiffening being required.

US 2810587 A and US 3099459 A disclose examples of cylindrical rubber bearings for mounting tandem axles on vehicles.

It would also be technically possible to use some form of roller bearing. However, such a solution is extremely expensive.

Document DE-A-2 312 864, upon which the preamble of claim 1 is based, discloses a bearing arrangement for mounting the spring suspension for a bogie on a vehicle, which arrangement comprises a bracket, a leaf-spring support and two bearing elements, and each bearing element comprises a conical, tubular liner.

### DISCLOSURE OF THE INVENTION

The object of the invention is therefore to bring about mounting of the spring suspension for a leaf-spring-supported bogie which has low torsional rigidity and moreover is maintenance-free and also a method for bringing about mounting of the spring suspension for a leaf-spring-supported bogie which has low torsional rigidity and is maintenance-free.

The solution according to the invention for achieving this object is described in the characterizing part of patent claim 1 with regard to the bearing arrangement and by the features in patent claim 11 with regard to the method. The other patent claims contain advantageous developments and improvements of the bearing arrangement according to the invention.

With a bearing arrangement for mounting the spring suspension for a leaf-spring-supported bogie on a vehicle, comprising a bracket, a leaf-spring support and two bearing elements, the object of the invention is achieved by virtue of the fact that the bearing elements comprise a number of parallel, conical, tubular supporting elements and at least one conical, tubular liner. The method according to the invention achieves the object by virtue of.,the fact that two conical springing elements are mounted between a bracket and a leaf-spring support and that a clamping device is adjusted mechanically so that the springing elements are prestressed in the axial direction.

By means of this first embodiment of the bearing arrangement according to the invention, a bearing for mounting the spring suspension for a leaf-spring-supported bogie on a vehicle is obtained, which has low torsional rigidity at the same time as it is maintenance-free.

In an advantageous first development of the system according to the invention, the bearing arrangement is prestressed. The purpose of this is to increase the strength and the torsional rigidity in the bearing arrangement.

In an advantageous second development of the bearing arrangement according to the invention, the outer and/or inner surface on the bearing elements is designed so that it is parallel to the central axis of the bearing arrangement in the axial direction. The purpose of this is to facilitate assembly in some applications.

A method according to the invention for mounting the spring suspension on a leaf-spring-supported bogie on a vehicle comprises the steps of:
- mounting two conical bearing elements between a bracket and a leaf-spring support and
- mechanically adjusting a clamping device so that the springing elements are prestressed in the axial direction.

The advantage of this method is that it provides a bearing which has low torsional rigidity and high rigidities in other directions at the same time as it is maintenance-free.

### BRIEF DESCRIPTION OF FIGURES

The invention will be described in greater detail below with reference to illustrative embodiments shown in the accompanying drawings, in which
- FIG. 1: shows a bearing arrangement according to the invention,
- FIG. 2: shows a cross section of a bearing arrangement according to the invention, and
- FIG. 3: shows a cross section of a bearing element forming part of the bearing arrangement.

### DESCRIPTION OF ILLUSTRATIVE EMBODIMENTS

The illustrative embodiments of the invention described below with developments are to be regarded as only examples and are in no way to be limiting of the protective scope of the patent claims. In the illustrative embodiments described here, the same reference number in the various figures refers to the same type of component. Each component is therefore not described in detail in all the illustrative embodiments.

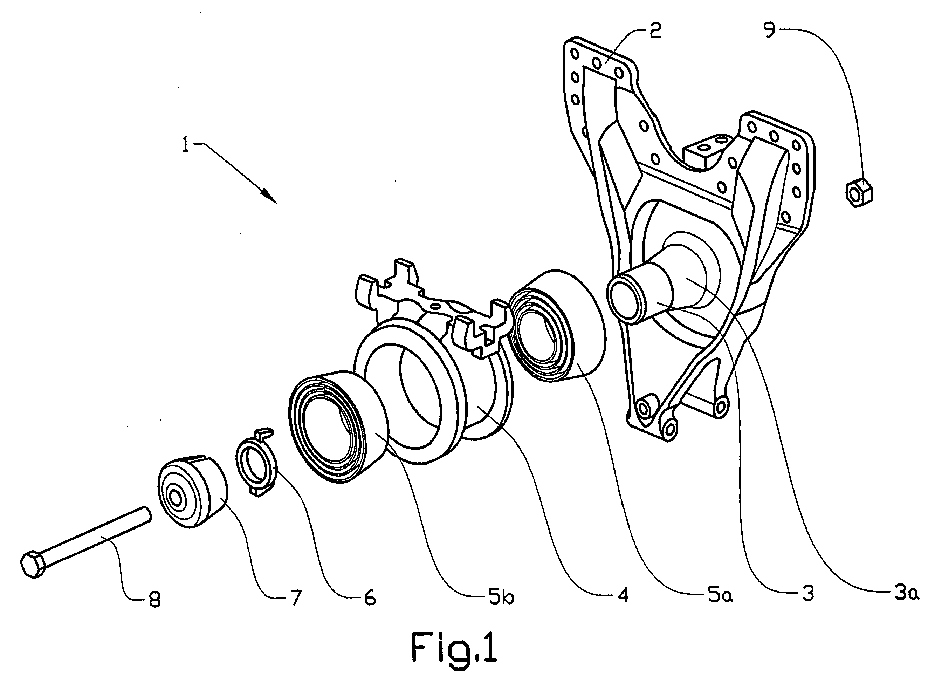

The bearing arrangement shown in Fig. 1 for mounting the spring suspension on a leaf-spring-supported bogie on a vehicle comprises a bracket 2, a leaf-spring support 4 and two bearing elements 5a, 5b. The bearing arrangement also comprises a rubber seal 6, a locking cone 7, a bolt 8 and a locking nut 9.

A leaf-spring-supported bogie is constructed with a leaf spring which is centrally suspended and mounted in a bracket in the form of a bogie support. A leaf spring is constructed from a number of spring leaves, either as a conventional leaf spring or as a parabolic spring. A rear axle is mounted in a known way at each of the two ends of the leaf spring. Such an arrangement is also referred to as a tandem axle. One or both of the rear axles can be driving.

The bracket 2, also referred to as a heart bracket, constitutes the central frame attachment for the bogie. It is fixed to the frame by bolted or riveted joints. It comprises a tubular neck element 3 with a conical portion 3a. The conical portion 3a is intended to interact with the bearing element 5a.

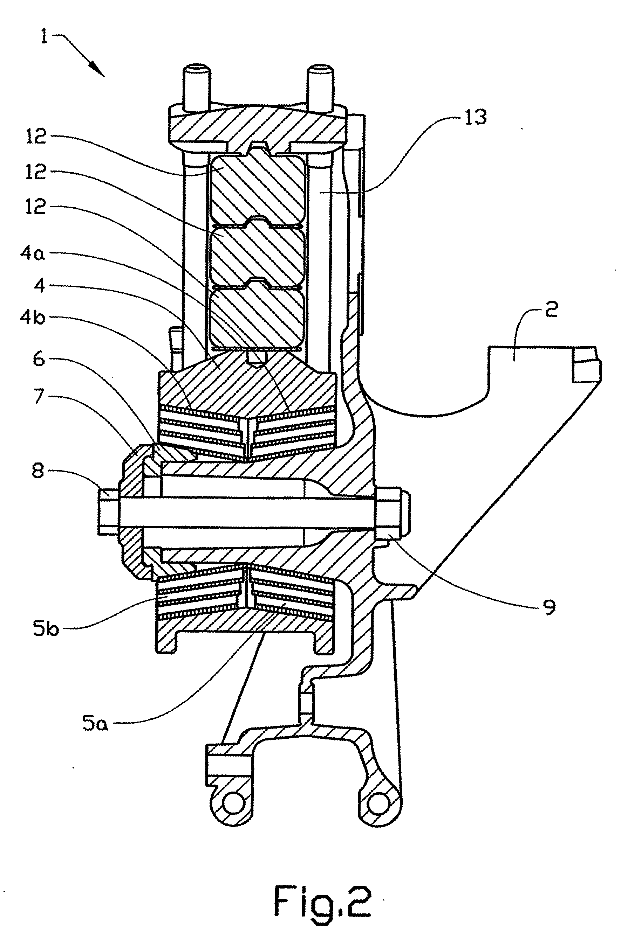

The leaf-spring support 4 constitutes the outer, movable part of the bearing arrangement. The leaf spring, consisting of a number of spring leaves 12, is fixed on the leaf-spring support 4 in a known manner, for example by clamps 13 (see Fig. 2). The inside of the leaf-spring support 4 comprises two conical surfaces 4a, 4b intended to interact with the outer surfaces of the bearing elements 5a, 5b.

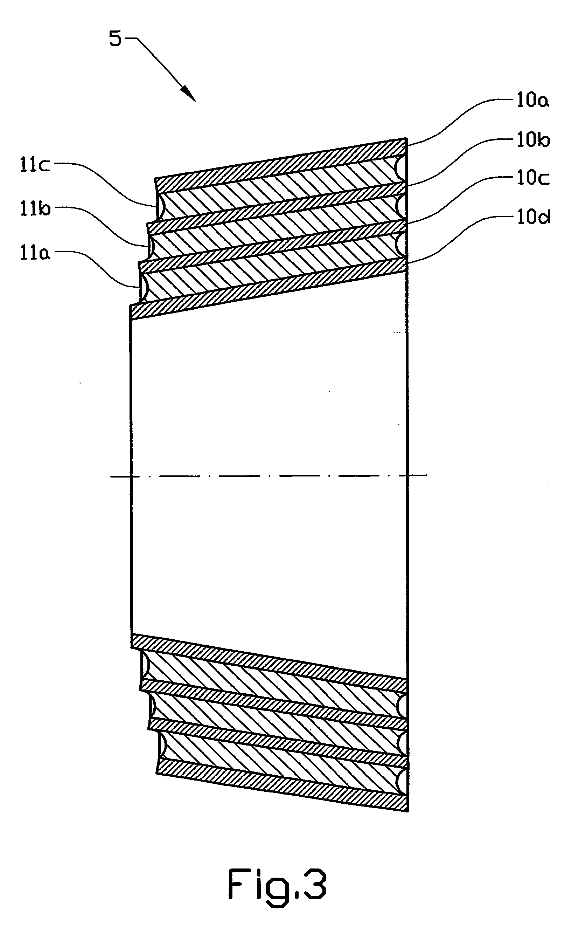

The bearing elements 5a, 5b consist of a number of conical, tubular supporting elements 10a - 10d (see Fig. 3). These supporting elements are preferably made of metal, although it is possible to use a composite material. The supporting elements are positioned parallel to one another. Between the supporting elements, there is at least one conical, tubular liner 11a - 11c. The liner is made of an elastic material, for example rubber or plastic. A bearing element 5 is advantageously made as a component, that is to say the supporting elements and the liners are firmly interconnected. This can be effected by, for example, vulcanization.

A bearing element 5 is advantageously made so that the innermost supporting element 10d is longer in the axial direction than the next supporting element 10c. The outermost supporting element 10a is shortest in the axial direction. The edge surfaces of the supporting elements advantageously lie in the same radial plane on the side where the diameter of the bearing element is smallest (compare Fig. 3) when the bearing element is unloaded.

When the bearing arrangement 1 is assembled, a first bearing element 5a is located on the conical portion 3a of the bracket 2. Then the conical surface 4a of the leaf-spring support is located against the bearing element 5a. A second bearing element 5b is located against the conical surface 4b of the leaf-spring support. The seal 6, the locking cone 7, the bolt 8 and the nut 9 are then mounted. The bearing arrangement is then prestressed by means of the bolt 8. When the bolt 8 is tightened, the locking cone 7 will be pressed in the direction toward the bracket 2. This results in the bearing elements 5a, 5b being deformed. The outer supporting element 10a of the bearing elements bears against the conical surfaces 4a, 4b of the leaf-spring support and therefore cannot move. The inner supporting element 10d of the bearing elements is movable in the axial direction, however, and will, when the bolt 8 is tightened, be displaced in the axial direction. The supporting element 10d in the bearing element 5a will be displaced in the direction toward the bracket 2, and the supporting element 10d in the bearing element 5b will at the same time be displaced in the opposite direction. This results in the edge surfaces of the supporting elements coming to lie in the same radial plane on the side where the diameter of the bearing element is greatest (compare Fig. 2) when the prestressing is complete, that is to say when the bearing arrangement has been assembled.

The degree of prestressing is determined by the strength requirements and rigidity requirements for the bearing arrangement. Material selection and the dimensioning of above all the liners will also affect the rigidities of the bearing arrangement in the various directions and thus also the magnitude of the prestressing.

By virtue of the fact that the bearing arrangement is made with conical bearing elements, the ultimate axial bearing resistance in the bearing arrangement is increased at the same time as the axial rigidity is high. The ultimate vertical bearing resistance increases at the same time as the strength of the bearing arrangement increases when the bearing arrangement is prestressed in the axial direction. The prestressing provides a precompression in the material of the liners. The desired freedom of movement in the bearing arrangement, that is to say the lowest possible torsional rigidity in the radial direction, is achieved by selecting the number of liners and the material properties of the liners. For typical bogie springing, a torsional movement of roughly +/- 10 degrees is desirable.

In the first illustrative embodiment, a bearing element 5 is made from four supporting elements 10a, 10b, 10c, 10d and three liners 11a, 11b, 11c. The dimensions of the component parts are selected so that they meet the requirements for strength and mechanical properties set for the complete bearing arrangement. This also applies for the properties of the rubber mixture of the liner.

In a development, it is possible to vary the number of supporting elements and liners in a bearing element. For example, it is possible to use three supporting elements and two liners. It is also possible to use five supporting elements and four liners. The number of supporting elements and liners is determined by the requirements for the bearing arrangement. Fewer supporting elements result in a bearing element which has higher torsional rigidity, more supporting elements and liners result in a bearing element with lower torsional rigidity but in which the rotational rigidity, for example, may also be lower.

In a second development, it is possible for the outer and/or inner surface on a bearing element also to consist of an elastic liner. This may be advantageous when, for example, the bracket and/or the leaf-spring support is/are suited to such an embodiment. The reason may be, for example, cost or easier assembly.

In a third development, the outer and/or inner surface on the bearing element is not conical but parallel to the central axis of the bearing arrangement in the axial direction. This may be advantageous when the construction allows, for example in order to reduce the cost or to simplify assembly.

In a first illustrative embodiment of the method according to the invention, two conical bearing elements are mounted between a bracket and a leaf-spring support. A mechanical clamping device is then adjusted so that the bearing elements are prestressed in the axial direction. The advantage of this method is that mounting which has low torsional rigidity, high rigidity in other directions and great strength and is maintenance-free is obtained. The degree of prestressing is adapted to the requirements for the bearing arrangement.

The invention is not to be regarded as being limited to the illustrative embodiments described above, but a number of further variants and modifications are conceivable within the scope of the following patent claims. For example, the bearing arrangement can also be used for other types of mounting when a bearing with high ultimate bearing resistance and low rigidity in the radial direction, that is to say low torsional rigidity, is required.

## Claims

1. A bearing arrangement (1) for mounting the spring suspension for a leaf-spring-supported bogie on a vehicle, comprising a bracket (2), a leaf-spring support (4) and two bearing elements (5a, 5b), **characterized in that** each bearing element (5a, 5b) comprise a number of conical, parallel tubular supporting elements (10a, 10b, 10c, 10d) and at least one conical, tubular liner 11a, 11b, 11c).

2. The bearing arrangement as claimed in claim 1, **characterized in that** the bearing elements (5a, 5b) are restrained between the leaf-spring support (4) and the bracket (2) so that pretensioning of the bearing elements (5a, 5b) in the axial direction is obtained.

3. The bearing arrangement as claimed in claim 1 or 2, **characterized in that** the conical, parallel supporting elements (10a, 10b, 10c, 10d) vary in length in the axial direction so that the innermost supporting element (10d) is longer than the outermost supporting element (10a).

4. The bearing arrangement as claimed in any one of claims 1 to 3, **characterized in that** the conical, parallel supporting elements (10a, 10b, 10c, 10d) are connected firmly to the liners (11a, 11b, 11c).

5. The bearing arrangement as claimed in any one of claims 1 to 4, **characterized in that** the outer conical, tubular supporting element (10a) is designed with the outer surface parallel to the central axis of the bearing arrangement in the axial direction.

6. The bearing arrangement as claimed in any one of claims 1 to 4, **characterized in that** the inner conical, tubular supporting element (10d) is designed with the inner surface parallel to the central axis of the bearing arrangement in the axial direction.

7. The bearing arrangement as claimed in any one of claims 1 to 6, **characterized in that** the conical, parallel tubular supporting elements (10a, 10b, 10c, 10d) are made of metal or a composite.

8. The bearing arrangement as claimed in any one of claims 1 to 7, **characterized in that** the at least one conical, tubular liner (11a, 11b, 11c) is made of a rubber or plastic material.

9. The bearing arrangement as claimed in any one of claims 1 to 8, **characterized in that** a bearing element (5a; 5b) is constructed from four conical, parallel tubular supporting elements (10a, 10b, 10c, 10d) and three conical, tubular liners (11a, 11b, 11c).

10. The bearing arrangement as claimed in any one of claims 1 to 9, **characterized in that** a bearing element is constructed from more than four conical, parallel tubular supporting elements (10) and more than three conical, tubular liners (11).

11. A method for mounting a bearing arrangement according to any of claims 1 to 10 on a leaf-spring-supported bogie on a vehicle, comprising the steps of:
mounting two conical bearing elements between a bracket and a leaf-spring support,
- mechanically adjusting a clamping device so that the bearing elements are prestressed in the axial direction.

12. A vehicle comprising two rear axles, two brackets (2) and two leaf springs, where the rear axles are mounted at the two ends of the leaf springs, **characterized in that** the leaf springs are mounted on the brackets (2) by a bearing arrangement according to any one of claims 1-10.

## Patentansprüche

1. Lageranordnung (1) zur Anbringung der Federaufhängung für ein blattfedergelagertes Fahrgestell an einem Fahrzeug, mit einer Halterung (2), einem Blattfederträger (4) und zwei Lagerelementen (5a, 5b), **dadurch gekennzeichnet, dass** jedes Lagerelement (5a, 5b) eine Anzahl von konischen, parallelen rohrförmigen Trägerelementen (10a, 10b, 10c, 10d) und wenigstens eine konische rohrförmige Zwischenlage (11a, 11b, 11c) umfasst.

2. Lageranordnung nach Anspruch 1, **dadurch gekennzeichnet, dass** die Lagerelemente (5a, 5b) zwischen dem Blattfederträger (4) und der Halterung (2) so eingespannt sind, dass eine Vorspannung der Lagerelemente (5a, 5b) in Axialrichtung erhalten wird.

3. Lageranordnung nach Anspruch 1 oder 2, **dadurch gekennzeichnet, dass** die konischen parallelen Trägerelemente (10a, 10b, 10c, 10d) in Axialrichtung in der Länge variieren, so dass das innerste Trägerelement (10d) länger ist als das äußerste Trägerelement (10a).

4. Lageranordnung nach einem der Ansprüche 1 bis 3, **dadurch gekennzeichnet, dass** die konischen parallelen Trägerelemente (10a, 10b, 10c, 10d) fest mit den Zwischenlagen (11a, 11b, 11c) verbunden sind.

5. Lageranordnung nach einem der Ansprüche 1 bis 4, **dadurch gekennzeichnet, dass** das äußere konische rohrförmige Trägerelement (10a) so gestaltet ist, dass seine äußere Oberfläche parallel zu der Mittelachse der Lageranordnung in der Axialrichtung verläuft.

6. Lageranordnung nach einem der Ansprüche 1 bis 4, **dadurch gekennzeichnet, dass** das innere konische rohrförmige Trägerelement (10d) so gestaltet ist, dass seine Innenfläche parallel zu der Mittelachse der Lageranordnung in der Axialrichtung verläuft.

7. Lageranordnung nach einem der Ansprüche 1 bis 6, **dadurch gekennzeichnet, dass** die konischen parallelen rohrförmigen Trägerelemente (10a, 10b, 10c, 10d) aus Metall oder aus einem Verbundstoff hergestellt sind.

8. Lageranordnung nach einem der Ansprüche 1 bis 7, **dadurch gekennzeichnet, dass** die wenigstens eine konische rohrförmige Zwischenlage (11a, 11b, 11c) aus einem Gummi- oder Kunststoffmaterial hergestellt ist.

9. Lageranordnung nach einem der Ansprüche 1 bis 8, **dadurch gekennzeichnet, dass** ein Lagerelement (5a, 5b) aus vier konischen parallelen rohrförmigen Trägerelementen (10a, 10b, 10c, 10d) und drei konischen rohrförmigen Zwischenlagen (11a, 11b, 11c) aufgebaut ist.

10. Lageranordnung nach einem der Ansprüche 1 bis 9, **dadurch gekennzeichnet, dass** ein Lagerelement aus mehr als vier konischen parallelen rohrförmigen Trägerelementen (10) und mehr als drei konischen rohrförmigen Zwischenlagen (11) aufgebaut ist.

11. Verfahren zur Anbringung einer Lageranordnung nach einem der Ansprüche 1 bis 10 an einem blattfedergelagerten Fahrgestell an einem Fahrzeug, mit den Schritten
- Anbringung zweier konischer Lagerelemente zwischen einer Halterung und einem Blattfederträger,
- mechanische Einstellung einer Klemmvorrichtung, so dass die Lagerelemente in Axialrichtung vorgespannt werden.

12. Fahrzeug mit zwei Hinterachsen, zwei Halterungen (2) und zwei Blattfedern, wobei die Hinterachsen an den zwei Enden der Blattfedern angebracht sind, **dadurch gekennzeichnet, dass** die Blattfedern an den Halterungen (2) durch eine Lageranordnung gemäß einem der Ansprüche 1 bis 10 angebracht ist.

## Revendications

1. Agencement de palier (1) pour monter la suspension à ressort pour un essieu tandem supporté par un ressort en lame sur un véhicule, comprenant un étrier (2), un support de ressort en lame (4) et deux éléments formant palier (5a, 5b), **caractérisé en ce que** chaque élément formant palier (5a, 5b) comporte plusieurs éléments de support coniques parallèles tubulaires (10a, 10b, 10c, 10d) et au moins un coussinet conique tubulaire (11a, 11b, 11c).

2. Agencement de palier selon la revendication 1, **caractérisé en ce que** les éléments formant palier (5a, 5b) sont retenus entre le support de ressorts en lame (4) et l'étrier (2) de sorte que la prétension des éléments formant palier (5a, 5b) dans la direction axiale est obtenue.

3. Agencement de palier selon la revendication 1 ou 2, **caractérisé en ce que** les éléments de support coniques parallèles (10a, 10b, 10c, 10d) ont une longueur qui varie dans la direction axiale, de sorte que l'élément de support le plus intérieur (10d) est plus long que l'élément de support le plus extérieur (10a).

4. Agencement de palier selon l'une quelconque des revendications 1 à 3, **caractérisé en ce que** les éléments de support coniques parallèles (10a, 10b, 10c, 10d) sont reliés fermement aux coussinets (11a, 11b, 11c).

5. Agencement de palier selon l'une quelconque des revendications 1 à 4, **caractérisé en ce que** l'élément de support conique tubulaire extérieur (10a) est conçu avec la surface extérieure parallèle à l'axe central de l'agencement de palier dans la direction axiale.

6. Agencement de palier selon l'une quelconque des revendications 1 à 4, **caractérisé en ce que** l'élément de support conique tubulaire intérieur (10d) est conçu avec la surface intérieure parallèle à l'axe central de l'agencement de palier dans la direction axiale.

7. Agencement de palier selon l'une quelconque des revendications 1 à 6, **caractérisé en ce que** les éléments de support coniques parallèles tubulaires (10a, 10b, 10c, 10d) sont fabriqués en métal ou un matériau composite.

8. Agencement de palier selon l'une quelconque des revendications 1 à 7, **caractérisé en ce que** le au moins un coussinet conique tubulaire (11a, 11b, 11c) est fabriqué en caoutchouc ou en matière plastique.

9. Agencement de palier selon l'une quelconque des revendications 1 à 8, **caractérisé en ce qu'**un élément formant palier (5a ; 5b) est construit à partir de quatre éléments de support coniques parallèles tubulaires (10a, 10b, 10c, 10d) et trois coussinets coniques tubulaires (11a, 11b, 11c).

10. Agencement de palier selon l'une quelconque des revendications 1 à 9, **caractérisé en ce qu'**un élément formant palier est construit à partir de plus de quatre éléments de support coniques parallèles tubulaires (10) et de plus de trois coussinets coniques tubulaires (11).

11. Procédé de montage d'un agencement de palier selon l'une quelconque des revendications 1 à 10 sur un essieu tandem supporté par un ressort en lame sur un véhicule, comportant les étapes consistant à :
- monter deux éléments formant palier coniques entre un étrier et un support de ressort en lame,
- ajuster mécaniquement un dispositif de serrage afin que les éléments formant palier soient précontraints dans la direction axiale.

12. Véhicule comportant deux essieux arrière, deux étriers (2) et deux ressorts en lame, où les essieux arrière sont montés sur les deux extrémités des ressorts en lame, **caractérisé en ce que** les ressorts en lame sont montés sur les étriers (2) par un agencement de palier selon l'une quelconque des revendications 1 à 10.
